# EUROPÄISCHE PATENTANMELDUNG

(11) **EP 4 814 072 A1**
(43) Veröffentlichungstag der Anmeldung: **30.09.2026**
(21) Anmeldenummer: 25167191.3
(22) Anmeldetag: 28.03.2025
(51) Int. Cl.: C09J 7/24, B32B 27/30, B32B 27/32

(54) **HAFTFOLIE, FOLIENROLLE, VERFAHREN ZUR HERSTELLUNG EINER HAFTFOLIE UND VERWENDUNG EINER HAFTFOLIE**

(71) Anmelder: Nitto Advanced Film Gronau GmbH, 48599 Gronau (DE); NITTO DENKO CORPORATION, Ibaraki-shi Osaka 567-8680 (JP)
(72) Erfinder: Boccuto, Domenico, 48703 Stadtlohn (DE)
(74) Vertreter: Andrejewski - Honke Patent- und Rechtsanwälte Partnerschaft mbB

(57) **Zusammenfassung**

Die Erfindung betrifft eine Haftfolie mit zumindest einer Trägerschicht (1), welche eine erste Haftfolienoberfläche bildet, und mit einer Haftschicht (2), welche eine zweite Haftfolienoberfläche bildet, wobei die Trägerschicht (1) auf Basis von Polyolefin und die Haftschicht (2) gemeinsam von einer coextrudierten Folienstruktur mit einer Foliendicke zwischen 35 µm und 185 µm gebildet sind, wobei die Trägerschicht (1) eine Prägung und mit der Prägung eine Trägerschichtdicke zwischen 30 µm und 150 µm aufweist, wobei die Prägung sich über eine Prägungshöhe erstreckt, welche zumindest 30% der Trägerschichtdicke und/oder zwischen 15 µm und 65 µm beträgt und wobei die Haftschicht (2) eine Haftschichtdicke zwischen 2 µm und 30 µm aufweist. Gegenstand der Erfindung sind des Weiteren eine Folienrolle mit der aufgewickelten Haftfolie, ein Verfahren zur Herstellung der Haftfolie und die Verwendung einer Haftfolie als Transferfolie.

## Beschreibung

Die Erfindung betrifft eine Haftfolie mit zumindest einer Trägerschicht, welche eine erste Haftfolienoberfläche bildet, und eine Haftschicht, welche eine zweite Haftfolienoberfläche bildet. Gegenstand der Erfindung sind des Weiteren eine Folienrolle mit der aufgewickelten Haftfolie, ein Verfahren zur Herstellung einer Haftfolie sowie eine Verwendung der Haftfolie.

Die Haftfolie kann im Rahmen der Erfindung für unterschiedliche Zwecke vorgesehen sein. Insbesondere soll die Haftfolie auch als sogenannte Applikationsfolie oder Transferfolie geeignet sein.

Im Rahmen einer solchen Anwendung ist die Haftfolie beispielsweise in der Grafikindustrie, bei Beschriftungen und anderen Dekorationen dazu vorgesehen, selbstklebende Elemente wie Aufkleber, geschnittene Buchstaben, Abziehbilder oder dergleichen auf einem Untergrund zu applizieren. Solche selbstklebenden Dekorationselemente sind häufig als Folien ausgestaltet und können auf einem Release-Träger bereitgestellt werden. Insbesondere kann vorgesehen sein, dass die Haftfolie als Transferfolie auf zumindest ein selbstklebendes Dekorationselement aufgebracht wird, welches auf einem Release-Träger bereitgestellt wird. Die Haftfolie soll dann mit der Haftschicht derart auf dem zumindest einen selbstklebenden Dekorationselement an dessen Außenseite haften, dass das Dekorationselement von dem Release-Träger abgezogen werden kann.

Das Dekorationselement wird dann von der Trägerfolie übernommen und kann auf einem Untergrund platziert werden. Insbesondere kann das zumindest eine selbstklebende Dekorationselement zusammen mit der Transferfolie lagerichtig positioniert und angedrückt werden, wodurch das zumindest eine selbstklebende Dekorationselement mit dem Untergrund verklebt wird. Abschließend wird die Transferfolie von dem Dekorationselement und üblicherweise auch seitlich dazu von dem Untergrund abgezogen. Die Haftfähigkeit der Transferfolie muss hierfür in einer geeigneten Weise eingestellt sein. Einerseits soll die Haft- und Haltekraft so groß sein, dass das selbstklebende Dekorationselement zunächst von dem Release-Träger abgezogen werden kann, wobei nachfolgend jedoch auch ein möglichst leichtes Lösen von dem Dekorationselement und dem angrenzenden Untergrund möglich sein soll. Dabei soll insbesondere auch vermieden werden, dass Bestandteile der Haftschicht auf dem Untergrund zurückbleiben und diesen dadurch verunreinigen. Diese Maßgabe soll vorzugsweise bei unterschiedlichen Arten von Untergründen erfüllt sein.

Die Haftfolie kann in der beschriebenen Weise also zusammen mit zumindest einem Dekorationselement für Werbe- und Dekorationszwecke genutzt werden. Beispielsweise können Dekorationselemente in Form von Buchstaben, Logos oder dergleichen auf verschiedenen Untergründen wie Fahrzeugen, Wänden, Türen, Schaufenstern, Scheiben im Allgemeinen oder anderen Flächen positioniert werden.

Dazu ist es üblicherweise auch notwendig oder zumindest zweckmäßig, wenn die Haftfolie durchsichtig ist, sodass die zwischenzeitig mit der Transferfolie aufgenommenen Dekorelemente auch für den Benutzer sichtbar sind.

Aus der Praxis sind Transferfolien aus Polyolefin bekannt, welche einseitig mit einem druckempfindlichen Klebstoff (PSA - pressure sensitive adhesive) auf Acrylharzbasis beschichtet sind. Entsprechende Transferfolien werden üblicherweise als Folienrolle mit einer gewünschten Breite bereitgestellt.

Um ein ordnungsgemäßes Abwickeln der Haftfolie zu gewährleisten, muss eine geeignete, nicht zu hohe Abwickelkraft vorgesehen sein. Der druckempfindliche Klebstoff soll dabei auch vollständig an der Seite der Haftfolie verbleiben, an der er zunächst aufgebracht wurde. Ein Zerreißen der Klebstoffschicht und Klebstoffreste an der gegenüberliegenden Seite sind nicht erwünscht.

In diesem Zusammenhang ist es auch bekannt, Haftfolien auf ihrer dem druckempfindlichen Klebstoff gegenüberliegenden Seite mit einer Prägung zu versehen. Haftfolien in Form von Klebebändern mit einer der Haftschicht gegenüberliegenden Prägung oder anderweitigen Strukturierung sind beispielsweise aus DE 10 2008 038 472 A1, JP-H02110181 A und EP 0 028 771 B1 bekannt.

Die EP 2 216 382 A1 beschreibt eine als Schutzfolie vorgesehene Haftfolie, wobei die Möglichkeit einer matten oder geprägten Ausgestaltung gegenüber der Haftschicht grundsätzlich genannt ist und wobei die Rauigkeit in Bezug auf die Foliendicke vernachlässigbar ist.

Die EP 2 958 969 B1 offenbart eine vergleichsweise dicke Folie mit einer bevorzugten Dicke von beispielsweise 508 µm, welche gegenüberliegend der Haftschicht eine Prägung aufweisen kann.

Grundsätzlich sind verschiedene Ausführungen von ungeprägten und unstrukturierten Haftfolien mit einer coextrudierten Folienstruktur bekannt.

Hierzu wird exemplarisch auf EP 0 761 315 B1, EP 0 299 884 B1, EP 1 126 000 B1, EP 1 099 738 B1, EP 0 826 754 B1 und WO 00/71633 A1 verwiesen.

Bei in der Praxis als Transferfolien eingesetzten Haftfolien ergeben sich mehrere Herstellungsschritte. Zunächst wird in der Regel in einem Folienbildungsschritt eine Ausgangsfolie durch Folienextrusion oder Kalandrierung gebildet. Danach sind dann eine Folienprägung sowie eine Beschichtung mit Haftklebstoff vorgesehen. Schließlich erfolgt ein Zuschneiden der Folie in einer gewünschten Länge und Breite, wobei die Haftfolie in der Regel als Folienrolle bereitgestellt wird.

Die aktuell in der Praxis verbreiteten Haftklebstoff-Zusammensetzungen sind hauptsächlich lösungsmittel- oder wasserbasierte Polymerzusammensetzungen und müssen nach dem Auftragen auf das häufig auf Polyolefin-Basis gebildete Foliensubstrat getrocknet werden. Dieser Trocknungsprozess hat jedoch Einschränkungen hinsichtlich Geschwindigkeit und Effizienz. Wenn ein Aufwickeln zu einer Folienrolle bereits vor dem Trocknen erfolgt, kann trotz einer möglichen Prägung oder anderweitigen Strukturierung häufig nicht vermieden werden, dass der Haftklebstoff auch an der gegenüberliegenden Seite der Folie anhaftet, wobei im Falle einer Strukturierung sogar eine größere Oberfläche für eine Verbindung bereit steht.

Durch die Anwendung hoher Trocknungstemperaturen kann der Beschichtungsprozess beschleunigt werden. Dabei besteht jedoch die Gefahr, dass sich die Prägung aufgrund eines gewissen Memory-Effektes zurückgebildet oder der Beschichtungsprozess bei einem Erweichen der Folie instabil wird.

Der vorliegenden Erfindung liegt die Aufgabe zugrunde, eine Haftfolie anzugeben, die bei einer guten Materialausnutzung, ausgewogenen mechanischen Eigenschaften und ausgewogenen Haft- und Release-Eigenschaften einfach hergestellt werden kann. Insbesondere soll die Haftfolie auch als Transferfolie bzw. Applikationsfolie geeignet sein. Im Rahmen der Erfindung sollen des Weiteren eine Folienrolle mit der aufgewickelten Haftfolie, ein Verfahren zur Herstellung einer Haftfolie und eine Verwendung einer Haftfolie angegeben werden.

Gegenstand der Erfindung und Lösung der Aufgabe sind eine Haftfolie gemäß Patentanspruch 1, eine Folienrolle gemäß Patentanspruch 10, ein Verfahren zur Herstellung der Haftfolie gemäß Patentanspruch 11 sowie eine Verwendung der Haftfolie gemäß Patentanspruch 13.

Die Erfindung betrifft demnach gemäß einem ersten Aspekt eine Haftfolie mit zumindest einer Trägerschicht, welche eine erste Haftfolienoberfläche bildet, und mit einer Haftschicht, welche eine zweite Haftfolienoberfläche bildet, wobei die Trägerschicht auf Basis von Polyolefin und die Haftschicht gemeinsam von einer coextrudierten Folienstruktur mit einer Foliendicke zwischen 35 µm und 185 µm gebildet sind, wobei die Trägerschicht eine Prägung und mit der Prägung eine Trägerschichtdicke zwischen 30 µm und 150 µm aufweist, wobei die Prägung sich über eine Prägungshöhe erstreckt, welche zumindest 30 % und vorzugsweise maximal 85 %der Trägerschichtdicke und/oder zwischen 15 µm und 56 µm beträgt und wobei die Haftschicht eine Haftschichtdicke zwischen 2 µm und 30 µm aufweist.

Die Folienstruktur, welche mit zumindest der Trägerschicht und der Haftschicht die Haftfolie bildet, ist durch Coextrusion hergestellt. Eine nachträgliche Beschichtung mit Haftklebstoff ist nicht notwendig, sodass sich eine vergleichsweise einfache Herstellung ergibt. Darüber hinaus ergibt sich auch der Vorteil, dass durch die Coextrusion auch eine besonders gute Verbundhaftung zwischen den Schichten erreicht werden kann.

Die im Rahmen der Erfindung vorgesehene Prägung trägt dazu bei, dass bei einer zu einer Folienrolle aufgewickelten Haftfolie ein Abwickeln mit einer vergleichsweise geringen Abwickelkraft erreicht wird. Dabei ist auch zu beachten, dass durch die Coextrusion die Folienstruktur zunächst mit einer hohen Verbundhaftung gebildet wird, wobei erst nachgelagert das Aufwickeln der Haftfolie zu der Folienrolle erfolgt. Die Trägerschicht und die Haftschicht sind dann bereits in einem gewissen Maße abgekühlt und in der Regel auch erstarrt. Entsprechend resultiert alleine daraus bei dem Aufwickeln eine gegenüber dem Coextrusionsverbund reduzierte Haftung der Haftschicht in Bezug auf die Trägerschicht der angrenzenden Wickellage. Zusätzlich ist auch die durch die Prägung wesentlich reduzierte Anlagefläche zu berücksichtigen, sodass nicht nur ein Verblocken der Folienrolle sicher vermieden wird, sondern auch sehr geringe Abwickelkräfte im Vergleich zum Stand der Technik erreicht werden können.

Gemäß einem weiteren Aspekt ist die gesamte Folienstruktur beispielsweise im Vergleich zu vielen Haftfolien für Klebebänder vergleichsweise dünn. Dabei ist auch zu beachten, dass bezogen auf das eingesetzte Material die Trägerschichtdicke und damit auch die gesamte Foliendicke durch die vorgenommene Strukturierung und Materialverdrängung in einem gewissen Maße erhöht wird. Die Folie weist dadurch eine für den Benutzer angenehme Haptik auf und wirkt im Hinblick auf das eingesetzte Material vergleichsweise dick. Dies ist darauf zurückzuführen, dass durch die Prägestruktur insgesamt Bereiche unterschiedlicher Dicke bereitgestellt werden.

Abhängig von der Prägestruktur ergeben sich auch ausgedünnte Bereiche, sodass die Haftfolie auch eine vergleichsweise gute Biegsamkeit aufweist, was gerade bei einem bevorzugten Einsatz als Transferfolie bzw. Applikationsfolie vorteilhaft sein kann. Eine gewisse Biegsamkeit ist aber selbstverständlich auch bei einem alternativen Einsatz der Haftfolie, beispielsweise als Schutzfolie und insbesondere Oberflächenschutzfolie, zweckmäßig.

Weitere mögliche Anwendungen der Haftfolie betreffen exemplarisch die Verwendung Akustikfolie, aerodynamische Folie oder Antireflexionsfolie. Als Akustikfolie kann die die mit der Prägung versehene Trägerschicht für eine ungerichtete bzw. streuende Schallreflexion genutzt werden. Bei einer aerodynamischen Folie kann die Prägung für eine Luftstrombeeinflussung genutzt werden. Bei der Verwendung als Antireflexionsfolie wird die Streuung von Licht an der Prägung ausgenutzt.

**In** diesem Zusammenhang ist auch zu beachten, dass die Prägung im Rahmen der Erfindung eine erhebliche Prägungshöhe aufweist, welche zumindest 30 % der Trägerschichtdicke und/oder zwischen 15 µm und 65 µm beträgt. Die der Haftschicht gegenüberliegende erste Haftfolienoberfläche weist also eine sehr ausgeprägte Strukturierung auf, sodass die zuvor beschriebenen Aspekte besonders deutlich zutage treten.

Durch die erfindungsgemäße Prägungshöhe wird bei einer Folienrolle eine gute Trennbarkeit der Haftschicht von der Trägerschicht der angrenzenden Wickellage sichergestellt, selbst wenn sich die Haftschicht in einem gewissen Maße verformt. Auch dann verbleiben wesentliche Freiräume, welche in der beschriebenen Weise ein leichtes Abwickeln gewährleisten.

Durch die erfindungsgemäße Prägungshöhe ergibt sich auch eine entsprechend große Amplitude zwischen erhöhten und vertieften Bereichen, was auch im Hinblick auf eine Biegsamkeit der Trägerschicht und damit der gesamten Haftfolie vorteilhaft sein kann.

Gemäß einer bevorzugten Ausgestaltung der Erfindung ist vorgesehen, dass die Prägestruktur ein Muster, insbesondere ein gleichmäßiges Muster, aus Prägestrukturelementen aufweist.

Die Prägestrukturelemente können insbesondere die Form von Pyramiden oder Pyramidenstümpfen aufweisen. Entsprechende Prägestrukturen können sowohl an der ersten Haftfolienoberfläche vorstehen oder in die erste Haftfolienoberfläche eingedrückt sein. In Bezug auf die Form von Pyramiden oder Pyramidenstümpfen können also die Pyramiden bzw. Pyramidenstümpfe an der ersten Haftfolienoberfläche nach außen oder nach innen gerichtet sein.

Bei Prägestrukturelementen in Form von Pyramiden oder Pyramidenstümpfen können zwischen den einzelnen Prägestrukturelementen auch Stege, insbesondere durchlaufende Stege verbleiben.

Auch wenn Prägestrukturelemente die Form von Pyramiden oder Pyramidenstümpfen zweckmäßig sind, kommen auch andere regelmäßig oder unregelmäßig angeordnete Formen in Betracht, wobei die Prägestrukturelemente zueinander gleich oder auch unterschiedlich sein können.

Für eine regelmäßige Anordnung kommen beispielsweise auch Kegel, Kegelstümpfe, Kugelsegmente und insbesondere Halbkugeln, Tetraeder, Tetraederstümpfe und andere an zulaufende Formen in Betracht. Denkbar sind auch zylindrische Formen, welche auch eine von einer Kreisform abweichende Grundfläche aufweisen können. Des Weiteren kommen auch unterschiedlichste unregelmäßige Muster in Betracht. Auch die weiteren Ausgestaltungen von Prägestrukturelementen können nach außen vorstehen oder nach innen gerichtet sein.

Wenn die Prägestrukturelemente die Form von Pyramiden oder Pyramidenstümpfen aufweisen, kann eine vorstehende Ausgestaltung der Pyramiden bzw. Pyramidenstümpfe oder anderer Prägestrukturelemente nach außen (auch bezeichnet als männliche Konfiguration) vorgesehen sein. Im Rahmen einer solchen Ausgestaltung wird erreicht, dass einzelne separate Anlagepunkte zu der bei einer Folienrolle angrenzenden Haftschicht der nächsten Wickellage bestehen, während linienförmig durchgehende Verbindungen an den Stegen vermieden werden. Allerdings kann die Haftschicht gerade auch bei einer weichen Ausgestaltung auch teilweise in die Zwischenräume der Prägestrukturelemente eindringen, was wiederum nachteilig sein kann.

Wenn die Prägestrukturelemente in die Trägerschicht eingedrückt werden, können sich zwar je nach Ausgestaltung und Anordnung der Prägestrukturelemente gitterförmig durchgehende Verbindungsflächen ergeben, vorteilhaft kann dann aber sein, das dann innerhalb der gitterförmig Verbindungsflächen an den eingedrückten Prägestrukturelementen Luftkammer verbleiben, welche auch eine Art Luftpolster bilden und dort eine angrenzenden Haftschicht der nächsten Wickellage auf Abstand halten können.

Wenn die Prägestrukturelemente gemäß einer bevorzugten Ausgestaltung in einem gleichmäßigen Muster angeordnet sind, kann für dieses Muster auch eine Zellenfläche bestimmt werden. Als Zellenfläche wird in diesem Zusammenhang die Fläche einer Einheitszelle bezeichnet, welche das gleichmäßige Muster bildet. In Bezug auf die Form von Pyramiden oder Pyramidenstümpfen mit dazwischen angeordneten Stegen wird die Zellenfläche beispielsweise von der Fläche der Pyramide bzw. des Pyramidenstumpfes sowie einer umlaufend halben Stegbreite definiert.

Unabhängig von der konkreten Ausgestaltung der Prägestrukturelemente kann die Zellenfläche beispielsweise zwischen 0,09 mm² und 0,49 mm² betragen. Beispielsweise können Prägestrukturelemente in Form von Pyramiden oder Pyramidenstümpfen jeweils bei einer quadratischen Grundform eine Kantenlänge zwischen 300 µm und 500 µm aufweisen, wobei die dazwischen verlaufenden Stege beispielsweise eine Stegbreite zwischen 50 µm und 150 µm aufweisen können.

Gemäß einer bevorzugten Ausgestaltung der Erfindung ist auch im Sinne einer einfachen Herstellung vorgesehen, dass die Folienstruktur genau zweischichtig aus der Trägerschicht und der Haftschicht oder auch genau dreischichtig mit einer Haftvermittlerschicht zwischen der Trägerschicht und der Haftschicht gebildet ist.

Je nach Materialauswahl für die Trägerschicht und Haftschicht ist eine genau zweischichtige Ausgestaltung in vielen Fällen ausreichend. Grundsätzlich kann es aber auch zweckmäßig oder notwendig sein, zur Verbesserung der Verbundhaftung eine Haftvermittlerschicht zwischen der Trägerschicht und der Haftschicht vorzusehen. Eine solche Haftvermittlerschicht kann beispielsweise eine Schichtdicke zwischen 1 µm und 10 µm, insbesondere zwischen 3 µm und 7 µm aufweisen.

Die Haftschicht ist im Rahmen der Erfindung aus einem thermoplastischen Elastomer gebildet, welches - gegebenenfalls über die zuvor beschriebene Haftvermittlerschicht oder auch weitere Schichten - mit der Trägerschicht gemeinsam coextrudiert werden kann und eine hinreichende Haftfähigkeit bzw. Klebrigkeit aufweist.

Die Haftschicht kann dabei beispielsweise für eine Haftung auf Stahl, Aluminium, Kunststoffen wie Polycarbonat oder PVC, Glas, Lacken, insbesondere Lacken auf PU-Basis, oder dergleichen vorgesehen sein.

Im Hinblick auf eine bevorzugte und nachfolgend auch weiter erläuterte Verwendung als Transferfolie zum Aufbringen von zumindest einem selbstklebenden Dekorationselement auf einem Untergrund ist dann auch diesbezüglich eine geeignete Haftung auf dem selbstklebenden Dekorationselement zu beachten, wobei das Dekorationselement einerseits sicher aufgenommen und gehalten werden soll, andererseits aber auch ein Abziehen ohne einen übermäßigen Kraftaufwand oder eine Delaminierung der Coextrusionsfolie sichergestellt werden soll.

Entsprechende selbstklebende Dekorationselemente sind häufig aus einer Folie, insbesondere einer PVC-Folie gebildet, die sowohl bedruckt als auch unbedruckt sein kann. Entsprechend ist dann gerade für einen solchen Anwendungszweck ein Material für die Haftschicht auszuwählen, was in der beschriebenen Weise eine mittlere Haftfestigkeit ermöglicht.

Gemäß einer bevorzugten Ausgestaltung der Erfindung ist vorgesehen, dass die Haftschicht als Hauptbestandteil-Polymer ausgewählt aus der Gruppe Styrol-Block-Copolymer (SBC) und Ethylen-Vinylacetat-Copolymer (EVA) aufweist. Entsprechende Polymere bilden dann den Hauptbestandteil der Haftschicht, wenn diese mit einem Mengenanteil von zumindest 50 Gew.-%, vorzugsweise 70 Gew.-% enthalten sind. Grundsätzlich kann die Haftschicht auch vollständig aus den genannten Polymeren bestehen.

Hinsichtlich der Styrol-Block-Copolymere sind insbesondere Styrol-Isopren-Styrol-Copolymer (SIS), Styrol-Butadien-Styrol-Copolymer (SBS), Styrol-Ethylen-Butylien-Styrol-Copolymer (SEBS) und Styrol-Ethylen-Propylen-Styrol-Copolymer (SEPS) geeignet. Auch wenn grundsätzlich eine Mischung von Styrol-Block-Copolymeren in Betracht kommt, wird in der Regel die Mischung von Styrol-Block-Copolymeren aus verschiedenen Gruppen nicht notwendig oder zweckmäßig sein.

Hinsichtlich der im Rahmen der Erfindung auch im besonderen Maße geeigneten Ethylen-Vinylacetat-Copolymere kann insbesondere eine Auswahl unter Berücksichtigung des Vinylacetat-Anteils in Bezug auf die Molmasse erfolgen. Gerade im Hinblick auf eine Verbindung der Haftschicht mit PVCbasierten Substraten, insbesondere aus PVC gebildeten Dekorationselementen, ist gemäß orientierender Versuche ein mittlerer bis hoher Vinylacetat-Anteil von mindestens 28%, insbesondere 40% bis 78%, bevorzugt 45 % bis 75 % bezogen auf die Molmaße zweckmäßig.

Um dann die Verbundhaftung zu der Trägerschicht zu verbessern, ist gemäß einer bevorzugten Ausgestaltung der Erfindung einer Haftvermittlerschicht zwischen der Trägerschicht und der Haftschicht vorgesehen. Dabei kann die Haftvermittlerschicht als Hauptbestandteil ein Ethylen-Vinylacetat-Copolymer aufweisen, welches aber gegenüber der Haftschicht einen geringeren Vinylacetat-Anteil aufweist. Bei einem niedrigen bis mittleren Vinylacetat-Anteil ergibt sich dann eine gute Verbundhaftung sowohl zu der Trägerschicht als auch der Haftschicht.

Der Vinylacetat-Anteil einer solchen Haftvermittlerschicht kann beispielsweise in einem Bereich von 12 % bis 35 % liegen, wobei die Haftvermittlerschicht vorzugsweise vollständig oder im Wesentlichen vollständig aus einem solchen Ethylen-Vinylacetat-Copolymer gebildet ist.

Insbesondere in der Haftschicht können auch die Klebrigkeit erhöhende Beimischungen vorgesehen sein, welche aber üblicherweise mit einem Anteil von weniger als 50 % vorgesehen sind. Entsprechende die Klebrigkeit erhöhende Harze werden auch als Tackifier oder Tackifier Resins bezeichnet. Geeignete Tackifier werden beispielsweise von den Unternehmen Kuraray Europe GmbH, Eastman und Kolon Industries angeboten. Entsprechende Harze können als sogenannte Kohlenwasserstoffharze (insbesondere C5 aliphatische Harze und C9 aromatische Harze) gebildet sein. Des Weiteren sind auch klebrig machende Harze auf der Basis von Kolophonium (Rosin Resin Tackifiers) und auf der Basis von Terpen bekannt.

Weitere Zusatz-Hilfs- und -füllstoffe sind im Rahmen der Erfindung nicht ausgeschlossen, bei vielen Anwendungszwecken jedoch nicht notwendig. Der Anteil an solchen zusätzlichen Bestandteilen liegt vorzugsweise bei weniger als 10 Gew.-%, besonders bevorzugt bei weniger als 5 Gew.-%, bezogen auf die Haftschicht, sofern entsprechende Zusätze überhaupt vorgesehen sind.

Die Trägerschicht ist erfindungsgemäß auf der Basis von Polyolefin gebildet. Der Anteil von Polyolefin in der Trägerschicht liegt entsprechend bei mehr als 50 Gew.-%, zumindest in Bezug auf die polymeren Bestandteile der Trägerschicht. Gemäß einer bevorzugten Ausgestaltung weist die Trägerschicht keine oder keine wesentlichen nicht-polymeren Bestandteile auf, sodass dann Polyolefin insgesamt der Hauptbestandteil mit einem Anteil von mehr als 50 Gew.-% ist.

Gemäß einer bevorzugten Ausgestaltung der Erfindung ist die Trägerschicht bezogen auf die Summe ihrer polymeren Bestandteile zu mehr als 90 Gew.-%, besonders bevorzugt zu mehr als 95 Gew.-% aus Polyolefin gebildet, wobei im Sinne einer besonders einfachen und kostengünstigen Fertigung die Trägerschicht vollständig aus Polyolefin bestehen kann. Geeignet sind insbesondere Polyethylen oder Polypropylen einschließlich entsprechender Copolymere und Blends.

Grundsätzlich sind alle Arten von Polyethylen geeignet, wobei häufig Standardpolymere im Sinne geringer Herstellungskosten ausreichend sind. So kann gemäß einer bevorzugten Ausgestaltung der Erfindung vorgesehen sein, dass die Trägerschicht Polyethylen niedriger Dichte (PE-LD) als Hauptbestandteil aufweist oder daraus vollständig besteht.

Grundsätzlich ist aber auch ein Blend von Polyethylen unterschiedlicher Dichte denkbar. Beispielsweise kann ein Blend aus Polyethylen hoher Dichte (PE-HD) und linearem Polyethylen niedriger Dichte (PE-LLD) gebildet sein, wobei insbesondere auch Polyethylen-Typen in Betracht kommen, die mit Metallocen-Katalysator gebildet sind (PE-mLLD).

Insbesondere für den bevorzugten Anwendungszweck als Transferfolie ist es zweckmäßig, wenn die coextrudierte Folienstruktur durchsichtig oder zumindest durchscheinend ist, um dann von der Transferfolie aufgenommene Dekorationselemente weiterhin sehen und in geeigneter Weise ausrichten zu können. So ist gemäß einer bevorzugten Ausgestaltung der Erfindung vorgesehen, dass die coextrudierte Folienstruktur durchsichtig ist und vorzugsweise eine Trübung von weniger als 10 %, insbesondere weniger als 5 % gemäß DIN 6180:2024-07 aufweist.

Gegenstand der Erfindung ist auch eine Folienrolle mit der aufgewickelten, zuvor beschriebenen Haftfolie. Erfindungsgemäß ist dann vorgesehen, dass eine Abwickelkraft (unwinding force) gemäß der FINAT-Testmethode FTM3 (low speed release force) kleiner als 0,08 N/cm (Newton pro Zentimeter), insbesondere kleiner als 0,06 N/cm ist. Wie auch nachfolgend anhand von Ausführungsbeispielen erläutert, wird die beschriebene Abwickelkraft vorzugsweise auch unabhängig von der Lagerdauer der Folienrolle erreicht. Während verschiedene aus dem Stand der Technik bekannte Haftklebstoffe bei einer längeren Lagerdauer ihre Haftkraft sehr wesentlich verändern können, so sind insbesondere die beschriebenen bevorzugten Materialien für die Haftschicht in Form von Styrol-Block-Copolymer und Ethylen-Vinylacetat-Copolymer in ihren Eigenschaften langfristig stabil.

FINAT ist eine internationale Vereinigung der europäischen Etikettenindustrie. Ein Zweck der Vereinigung FINAT ist die Einführung und Pflege branchenbezogener Verfahren, Standards und Testmethoden. In diesem Zusammenhang definiert FINAT verschiedene Standards bzw. Testmethoden FTM1 bis FTM30, wobei sich die Methode FTM3 auf die Trennkraft bei niedriger Geschwindigkeit bezieht.

Gegenstand der Erfindung ist auch ein Verfahren zur Herstellung einer Haftfolie, insbesondere zur Herstellung der zuvor beschriebenen Haftfolie. Bezüglich der bevorzugten Eigenschaften der in dem Verfahren hergestellten Haftfolie wird in diesem Zusammenhang auf die obigen Erläuterungen verwiesen.

Bei dem erfindungsgemäßen Verfahren ist vorgesehen, dass in einer Flachfolienextrusion eine Trägerschicht, welche eine erste Haftfolienoberfläche bildet, und eine Haftschicht, welche eine zweite Haftfolienoberfläche bildet, extrudiert werden. Sodann wird die coextrudierte Folienstruktur zu einer Walzenanordnung geführt, welche auf der Seite der Trägerschicht eine Walze umfasst. Die Trägerschicht wird dort durch die Prägewalze mit einer Prägung vorsehen.

Im Rahmen des beschriebenen Verfahrens ist insbesondere vorgesehen, dass die Trägerschicht nach der Coextrusion mit der Prägewalze in einem ersten Oberflächenkontakt geprägt wird. Dabei ist es insbesondere möglich und zweckmäßig, dass die Trägerschicht noch schmelzflüssig oder zumindest nicht vollständig erstarrt ist. Dies führt auch dazu, dass die Prägestruktur in die schmelzflüssige bzw. noch weiche Trägerschicht eingedrückt wird, wobei die Trägerschicht erst nachfolgend erstarrt. Es ergibt sich dann auch der Vorteil, dass selbst bei einer Erwärmung und/oder einer längeren Lagerung die Prägestruktur vollständig oder weitgehend erhalten bleibt, wobei insbesondere kein Memory-Effekt durch eine Schrumpfung oder eine Rückstellung zu erwarten ist. Entsprechende Effekte werden dagegen bei einem Prägen einer bereits erstarrten Folie regelmäßig beobachtet.

Insbesondere kann vorgesehen sein, dass die Prägewalze mit einer an der Haftschicht anliegenden Gegenwalze einen Walzenspalt bildet. Die Gegenwalze ist zweckmäßigerweise glatt, um die Haftschicht glatt auszugestalten und für die Strukturierung oder Prägung der Trägerschicht ein gleichmäßiges Widerlager zu bilden. Auch eine glatte Oberfläche der Haftschicht kann dabei im Zusammenhang mit der Klebrigkeit der eingesetzten thermoplastischen Polymere zu einer geeigneten Haftfähigkeit beitragen. Je nach Anwendungsfall ist jedoch eine gewisse Strukturierung der Haftschicht nicht ausgeschlossen.

Gegenstand der Erfindung ist auch die Verwendung der zuvor beschriebenen Haftfolie als Transferfolie zum Aufbringen von zumindest einem selbstklebenden Dekorationselement auf einem Untergrund. Wie auch eingangs beschrieben, kann es sich bei dem Dekorationselement um ein Logo, einen Buchstaben, oder dergleichen handeln. Mehrere Dekorationselemente können dabei insbesondere eine Buchstabenfolge bilden, wobei natürlich auch verschiedene Arten von selbstklebenden Dekorationselementen miteinander kombiniert werden können.

Im Rahmen der erfindungsgemäßen Verwendung kann insbesondere vorgesehen sein, dass das zumindest eine selbstklebende Dekorationselement aus einer Folie, insbesondere einer PVC-Folie, gebildet ist. Die Folie kann dabei sowohl bedruckt als auch unbedruckt sein. Beispielsweise ist es bekannt, aus einer farbigen, jedoch unbedruckten Folie Aufschriften für Fahrzeuge, Schaufensterscheiben oder dergleichen zu bilden, die dann mit der bevorzugt durchsichtigen Haftfolie präzise aufgebracht werden können.

So ist gemäß einer bevorzugten Ausgestaltung der Verwendung vorgesehen, dass das zumindest eine selbstklebende Dekorationselement mit der darauf aufgebrachten Transferfolie von einem Release-Träger abgezogen und somit von der Transferfolie übernommen wird. Nachfolgend wird das zumindest eine selbstklebende Dekorationselement mit der Transferfolie auf den Untergrund aufgebracht und damit verklebt. Abschließend wird die Transferfolie von dem Dekorationselement und üblicherweise auch seitlich dazu von dem Untergrund abgezogen.

Die erfindungsgemäße Haftfolie wird nachfolgend anhand von Figuren und Ausführungsbeispielen erläutert.

Es zeigen:
- Fig.1: eine erfindungsgemäße Haftfolie,
- Fig. 2: einen exemplarischen Schichtaufbau für eine alternative Ausgestaltung der Haftfolie,
- Fig. 3a: eine Draufsicht auf eine erste Haftfolienoberfläche, die mit einer Prägung versehen ist,
- Fig. 3b: ein Prägestrukturelement der Prägung in einer Draufsicht,
- Fig. 3c: das Prägestrukturelement gemäß der Fig. 3b in einer Seitenansicht,
- Fig. 4a bis Fig. 4c: Ansichten gemäß der Figuren 3a bis 3c für eine alternative Ausgestaltung der Prägung,
- Fig. 5: ein schematisches Diagramm zu der Herstellung der Haftfolie.

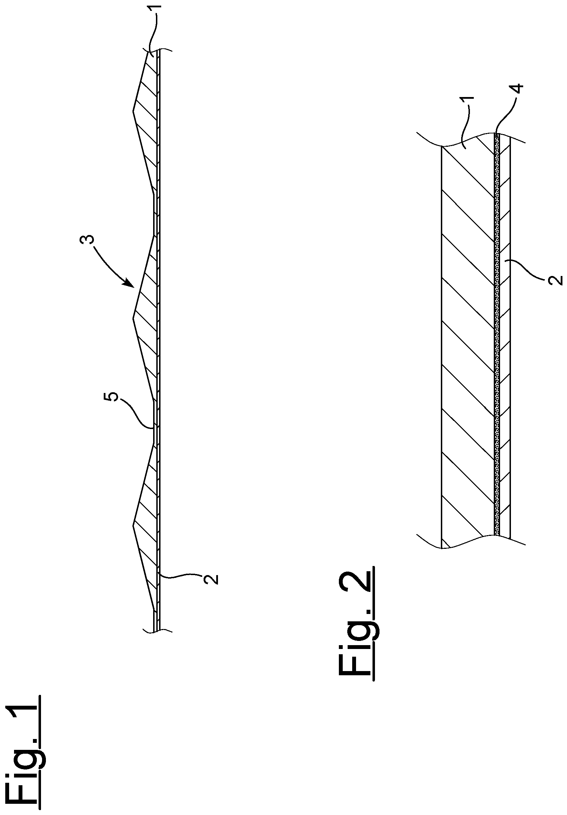

Die Fig. 1 zeigt in einer schematischen Ansicht den Aufbau einer Haftfolie, die aus einer zweischichtig coextrudierten Folienstruktur mit einer Trägerschicht 1 und mit einer Haftschicht 2 gebildet ist. Während die Trägerschicht 1 eine erste Haftfolienoberfläche bildet, wird eine gegenüberliegende zweite Haftfolienoberfläche von der Haftschicht 2 gebildet.

Wie auch nachfolgend anhand von Ausführungsbeispielen erläutert, ist die Trägerschicht 1 auf der Basis von Polyolefin gebildet. Des Weiteren ist bereits in der Fig. 1 zu erkennen, dass die Trägerschicht 1 eine ausgeprägte Strukturierung in Form einer Prägung aufweist.

Während die gesamte coextrudierte Folienstruktur eine Dicke zwischen 35 µm und 185 µm aufweist, weist die Trägerschicht mit der Prägung eine Trägerschichtdicke zwischen 35 µm und 150 µm, vorzugsweise zwischen 50 µm und 100 µm auf. Die Höhen sind dabei jeweils an der größten Dicke der coextrudierten Folienstruktur, also an den vorstehenden Bereichen der Prägung zu bestimmen. Dazwischen verbleiben dann durch die Prägung ausgedünnte Bereiche.

Bereits in der Fig. 1 ist zu erkennen, dass die Prägung Prägestrukturelemente 3 aufweist, welche nachfolgend weiter erläutert werden.

Die Prägung erstreckt sich über eine Prägungshöhe, welche zumindest 30 % und vorzugsweise max. 85 % der Trägerschichtdicke und/oder zwischen 15 µm und 65 µm beträgt.

Die Haftschicht 2 weist im Rahmen der Erfindung eine Haftschichtdicke zwischen 2 µm und 30 µm auf.

Die Fig. 2 zeigt eine alternative Ausgestaltung lediglich in einem kleinen Ausschnitt, wobei dort die coextrudierte Folienstruktur dreischichtig mit einer Haftvermittlerschicht 4 zwischen der Trägerschicht 1 und der Haftschicht 2 gebildet ist. **In** dem Ausschnitt ist die auch hier vorgesehene Prägung nicht dargestellt.

Die Prägung mit einer Vielzahl von Prägestrukturelementen 3 ist an der von der Trägerschicht 1 gebildeten ersten Haftfolienoberfläche gebildet, während die gegenüberliegende, von der Haftschicht 2 gebildete Haftfolienoberfläche eben ist.

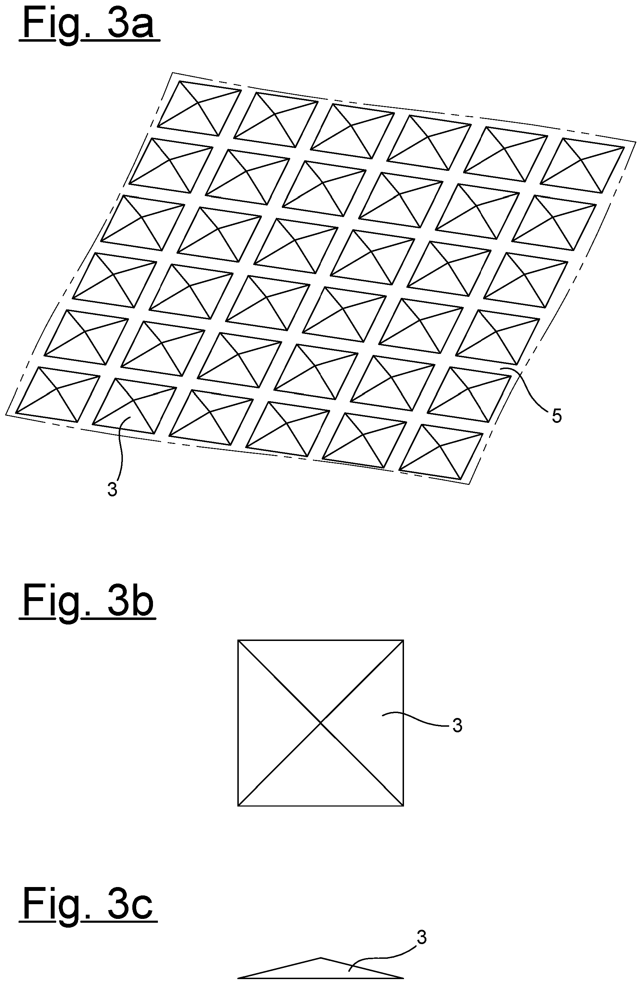

Die Fig. 3 zeigt eine bevorzugte Ausgestaltung der Prägestruktur mit einem gleichmäßigen Muster aus Prägestrukturelementen 3 in Form von Pyramiden. Zu erkennen ist, dass die Prägestrukturelemente 3 durch gitterförmig angeordnete Stege 5 voneinander getrennt sind.

Bei dem gleichmäßigen Muster aus Prägestrukturelementen 3 können aneinander anschließende Zellen mit jeweils einem Prägestrukturelement 3 und umlaufend einer halben Breite des Stegs 5 definiert werden.

Dabei kann insbesondere vorgesehen sein, dass bei dem gleichmäßigen Muster eine Zellenfläche zwischen 0,09 mm² und 0,49 mm² vorgesehen ist.

Die Figuren 3b und 3c zeigen zur Verdeutlichung die Prägestrukturelemente 3 einzeln in einer Ansicht von oben sowie in einer Seitenansicht.

Bei einer vergleichenden Betrachtung der Figuren 3a bis 3c wird deutlich, dass die Prägestrukturelemente sowohl an der ersten Haftfolienoberfläche vorstehen oder in die Trägerschicht 1 hineingedrückt sein können.

Die Figuren sollen sich exemplarisch auf eine nach außen gerichtete Pyramidenstruktur beziehen, bei der die einzelnen Spitzen der Prägestrukturelemente 3 also gegenüber den Stegen 5 vorstehen. Nachfolgend beschriebene Ausführungsbeispiele beziehen sich dagegen auf eine ebenfalls erfindungsgemäße Ausgestaltung, bei der die Prägestrukturelemente 3 in die Trägerschicht 1 hineingedrückt sind.

An den Stegen 5 ergibt sich dann zwar eine gitterförmige Verbindung, wobei aber an den Prägestrukturelemente 3 bei einem Aufrollen eingeschlossene Umgebungsluft als eine Luftpolster auch langfristig und/oder bei erhöhten Temperaturen und/oder bei einer vergleichsweise weichen Haftschicht 2 ein Abstand aufrechterhalten kann. Bei den üblichen Formen muss bei einer weiblichen Konfiguration mit eingedrückten Prägestrukturelemente 3 bei der Herstellung auch weniger Material der Trägerschicht 1 verdrängt werden.

Wenn die erfindungsgemäße Haftfolie dagegen vorstehende Prägestrukturelemente 3 aufweist und zu einer Folienrolle aufgewickelt wird, ergeben sich zwischen den einzelnen Folienlagen lediglich einzelne voneinander getrennte Anlagestellen und keine durchgehenden Verbindungen.

Die Fachperson kann vor diesem Hintergrund für einen konkreten Anwendungsfall und eine konkrete Materialkombination die geeignetste Konfiguration auswählen.

Die Prägestrukturelemente 3 in Form von Pyramiden können unabhängig von einer vorstehenden oder zurückspringenden Ausgestaltung beispielsweise bei einer quadratischen Grundfläche eine Kantenlänge zwischen 300 µm und 500 µm, beispielsweise um 400 µm aufweisen. Die Höhe der Prägestrukturelemente entspricht der Prägungshöhe und beträgt vorzugsweise zwischen 15 µm und 65 µm, beispielsweise 50 µm.

Die zwischen den Prägestrukturelementen 3 verbleibenden Stege 5 können beispielsweise eine Stegbreite zwischen 50 µm und 150 µm, insbesondere zwischen 80 µm und 100 µm aufweisen.

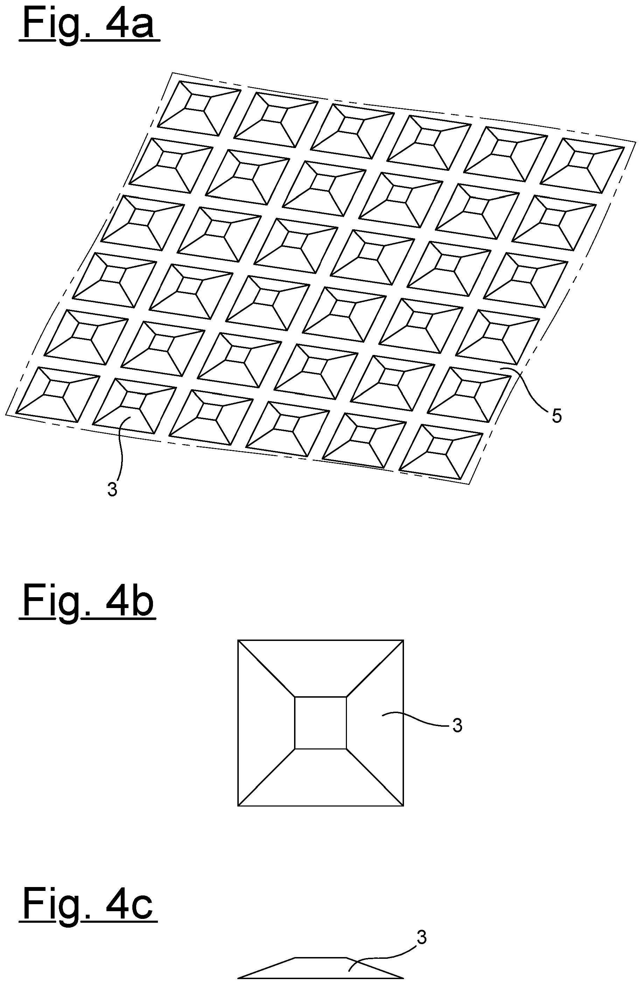

Die Figuren 4a bis 4c zeigen Darstellungen entsprechend der Figuren 3a bis 3c für eine alternative Ausgestaltung des Prägemusters. Als Alternative sind hier die Prägestrukturelemente 3 in Form von Pyramidenstümpfen gebildet, wobei ansonsten auf die Erläuterungen zu den Figuren 3a bis 3c verwiesen werden kann.

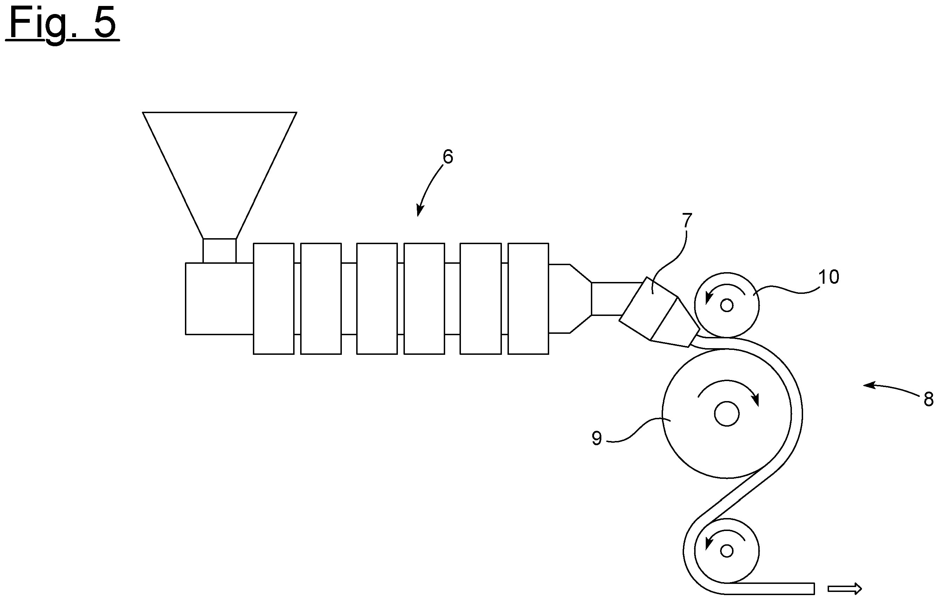

Die Fig. 5 zeigt schematisch die Herstellung der Haftfolie. Es erfolgt eine Flachfolienextrusion durch einen Extruder 6, der für die Coextrusion der Folienstruktur eine Breitschlitzdüse 7 aufweist. Unmittelbar nach der Breitschlitzdüse 7 ist eine Walzenanordnung 8 mit einer Prägewalze 9 und einer Gegenwalze 10 vorgesehen. Die coextrudierte Folienstruktur wird derart durch einen Walzenspalt zwischen der Prägewalze 9 und der Gegenwalze 10 geführt, dass die unmittelbar zuvor gebildete Trägerschicht 1 an der Prägewalze 9 und die Haftschicht 2 an der Gegenwalze 10 anliegen. In der noch schmelzflüssigen Trägerschicht 1 können dann die Prägestrukturelemente 3 gebildet werden, bevor die coextrudierte Folienstruktur weiter abgekühlt, transportiert und zweckmäßigerweise zu einer Folienrolle aufgewickelt wird (nicht dargestellt).

Um gewisse unmittelbar bei der Herstellung auftretende Rückstellkräfte im Polymermaterial auszugleichen, kann bei der Erzeugung der Prägung insbesondere vorgesehen sein, dass die Höhe der Prägeausformungen auf der Prägewalze 9 etwa 10-30% höher sind als die Prägehöhe in der Trägerschicht 1.

Im Rahmen von erfindungsgemäßen Ausführungsbeispielen Ex. 1 bis Ex. 5 wurden Haftfolien durch Coextrusion zweischichtig oder dreischichtig mit einer Trägerschicht, welche eine erste Haftfolienoberfläche bildet, und mit einer Haftschicht, welche eine zweite Haftfolienoberfläche bildet, hergestellt. Bei einer dreischichtigen Ausgestaltung ist zwischen der Trägerschicht und der Haftschicht eine Haftvermittlerschicht vorgesehen. Bei allen Ausführungsbeispielen erfolgte eine Flachfolienextrusion mit einer unmittelbar anschließenden Prägung an der ersten Haftfolienoberfläche (siehe Fig. 5) mit einer Prägung gemäß der Fig. 3a bis 3c (allerdings mit eingedrückten Prägestrukturelementen). Die Prägehöhe der in die Trägerschicht eingedrückten Prägestrukturelemente beträgt dabei 50 µm, wobei die Prägestrukturelemente in Form von Pyramiden eine Kantenlänge von 400 µm und die zwischen den Prägestrukturelementen verbleibenden Stege eine Breite von etwa 80 µm aufweisen.

Die Ausführungsbeispiele Ex. 1 bis Ex. 5 sind hinsichtlich ihres Folienaufbaus in den Tabellen 1 bis 5 weiter spezifiziert. Die Trägerschicht ist mit "Träger" und die die Haftschicht mit "Haft" bezeichnet, sofern eine Haftvermittlerschicht dazwischen vorgesehen ist, ist diese mit "HV" bezeichnet. Die Bezeichnung "VA-Anteil" bezieht sich auf den Vinylacetat-Anteil im EVA-Copolymer bezogen auf die Molmasse.

Ausführungsbeispiel Ex. 1:

**Tabelle 1**

| **Schicht** | **Dicke** | **Bestandteile** |
|---|---|---|
| Träger | 75 µm | 100% PE-LD (Dichte 0,934 g/cm³ / MFI 3,0 @ 190°C/2,16kg) |
| HV | 5 µm | 100% EVA (Dichte 0,949 g/cm³ / MFI 2,0 @ 190°C/2,16kg / 26% VA-Anteil) |
| Haft | 15 µm | 100% EVA (Dichte 1,070 g/cm³ / MFI 4,0 @ 190°C/2,16kg / 70% VA-Anteil) |

Ausführungsbeispiel Ex. 2:

**Tabelle 2**

| **Schicht** | **Dicke** | **Bestandteile** |
|---|---|---|
| Träger | 75 µm | 100% PE-LD (Dichte 0,934 g/cm³ / MFI 3,0 @ 190°C/2,16kg) |
| HV | 5 µm | 100% EVA (Dichte 0,949 g/cm³ / MFI 2,0 @ 190°C/2,16kg / 26% VA-Anteil) |
| Haft | 15 µm | 100% EVA (Dichte 1,040 g/cm³ / MFI 2,8 @ 190°C/2,16kg / 60% VA-Anteil) |

Ausführungsbeispiel Ex. 3:

**Tabelle 3**

| **Schicht** | **Dicke** | **Bestandteile** |
|---|---|---|
| Träger | 75 µm | 100% PE-LD (Dichte 0,934 g/cm³ / MFI 3,0 @ 190°C/2,16kg) |
| HV | 5 µm | 100% EVA (Dichte 0,949 g/cm³ / MFI 2,0 @ 190°C/2,16kg / 26% VA-Anteil) |
| Haft | 15 µm | 100% EVA (Dichte 0,990 g/cm³ / MFI 4,0 @ 190°C/2,16kg / 45% VA-Anteil) |

Ausführungsbeispiel Ex. 4:

**Tabelle 4**

| **Schicht** | **Dicke** | **Bestandteile** |
|---|---|---|
| Träger | 75 µm | 100% PE-LD (Dichte 0,934 g/cm³ / MFI 3,0 @ 190°C/2,16kg) |
| HV | 5 µm | 100% EVA (Dichte 0,949 g/cm³ / MFI 2,0 @ 190°C/2,16kg / 26% VA- Anteil) |
| Haft | 15 µm | 75% EVA (Dichte 0,990 g/cm³ / MFI 4,0 @ 190°C/2,16kg / 45% VA- Anteil) |
| | | 25% Tackifier Kohlenwasserstoffharz (Dichte 1,060 g/cm³ / MFI 4,0 @ 190°C/2,16kg) |

Ausführungsbeispiel Ex. 5:

**Tabelle 5**

| **Schicht** | **Dicke** | **Bestandteile** |
|---|---|---|
| Träger | 75 µm | 80% PE-HD (Dichte 0,960 g/cm³ / MFI 7,6 @ 190°C/2,16kg) |
| | | 20% PE-mLLD-C6 (Dichte 0,918 g/cm³ / MFI 4,5 @ 190°C/2,16kg) |
| Haft | 10 µm | 100% SEBS (Dichte 0,900 g/cm³ / MFI 22,0 @ 230°C/5kg) |

Nachfolgend sind zwei Vergleichsbeispiele VB1 und VB2 dargestellt. Vergleichsbeispiel VB1 ist eine ungeprägte coextrudierte Haftfolie (Tabelle 6) und VB 2 eine geprägte Folie welche nachträglich gegenüberliegend der Prägung mit einem Haftklebstoff beschichtet ist (Tabelle 7).

Vergleichsbeispiel VB1

**Tabelle 6**

| **Schicht** | **Dicke** | **Bestandteile** |
|---|---|---|
| Träger | 52 µm | 42% PP-BC (Dichte 0,905 g/cm³ / MFI 5,0 @ 230°C/2,16kg) |
| | | 42% PP (Dichte 0,905 g/cm³ / MFI 8,0 @ 230°C/2,16kg) |
| | | 8% PE-VLD (Dichte 0,912 g/cm³ / MFI 1,0 @ 190°C/2,16kg) |
| | | 8% PE-Plastomer (Dichte 0,896 g/cm³ / MFI 1,6 @ 190°C/2,16kg) |
| HV | 8 µm | 100% EVA (Dichte 0,949 g/cm³ / MFI 2,0 @ 190°C/2,16kg / 26% VA-Anteil) |
| Haft | 19 µm | 75% EVA (Dichte 0,990 g/cm³ / MFI 4,0 @ 190°C/2,16kg / 45% VA-Anteil) |
| | | 25% Tackifier Kohlenwasserstoffharz (Dichte 1,060 g/cm³ / MFI 4,0 @ 190°C/2,16kg) |

Vergleichsbeispiel VB2

**Tabelle 7**

| **Schicht** | **Dicke / Flächengewicht** | **Bestandteile** |
|---|---|---|
| Träger | 140 µm | 100% PE |
| Haft | 10 g/m² | 100% Haftklebstoff auf Acrylbasis |

In der Tabelle 8 ist einen Vergleich von Eigenschaften der Ausführungsbeispiele Ex1, Ex2, Ex3 und Ex5 sowie der Vergleichsbeispiele VB1 und VB2 dargestellt. Zu der ISO 527-3 sind zur besseren Zuordnung die der Fachperson geläufigen Bezeichnungen für die bestimmten Parameter in englischer Sprache wiedergegeben. Die Messungen gemäß den Messverfahren FINAT FTM 1 und FTM 3 beziehen sich auf eine Bestimmung nach einer Stunde (1h), einem Tag (1d) sowie einer Woche (7d).

**Tabelle 8**

| | | | **VB1** | **Ex1** | **Ex2** | **Ex3** | **Ex5** | **VB2** |
|---|---|---|---|---|---|---|---|---|
| | **Einheit** | **Testmethode** | | | | | | |
| Haftung zu Stahl | N/cm | Finat 1 (1h) | 1,0 | 0,6 | 0,8 | 0,8 | 0,4 | 1,1 |
| Haftung zu Polycarbonat | N/cm | Finat 1 (1h) | 3,0 | 2,0 | 2,5 | 2,7 | 0,6 | 1,8 |
| Haftung zu PVC | N/cm | Finat 1 (1h) | 2,1 | 1,7 | 2,4 | 1,5 | 0,5 | 0,8 |
| Haftung zu zu PU-Lack auf Stahl I | N/cm | Finat 1 (1h) | 0,8 | 0,7 | 0,5 | 0,5 | 0,4 | 2,1 |
| | | | | | | | | |
| Haftung zu Stahl | N/cm | Finat 1 (1d) | 1,0 | 0,6 | 0,7 | 0,9 | 0,5 | 1,8 |
| Haftung zu Polycarbonat | N/cm | Finat 1 (1d) | 2,9 | 2,1 | 2,5 | 2,8 | 1,1 | 1,5 |
| Haftung zu PVC | N/cm | Finat 1 (1d) | 2,6 | 1,2 | 2,6 | 1,8 | 0,9 | 0,6 |
| Haftung zu PU-Lack auf Stahl | N/cm | Finat 1 (1d) | 0,8 | 0,8 | 0,7 | 0,9 | 1,2 | 1,8 |
| | | | | | | | | |
| Abwickelkraft (Folienrolle) | N/cm | Finat 3 (1h) | 0,4 | < 0,02 | < 0,02 | < 0,02 | 0,01 | < 0,2 |
| Abwickelkraft (Folienrolle) | N/cm | Finat 3 (1d) | 0,4 | < 0,05 | < 0,04 | < 0,03 | 0,01 | < 0,1 |
| Abwickelkraft (Folienrolle) | N/cm | Finat 3 (7d) | 0,4 | < 0,05 | < 0,03 | < 0,03 | 0,01 | < 0,1 |
| | | | | | | | | |
| Tensile strength MD | N/mm² | ISO 527-3 | 35 | 25 | 25 | 25 | 18 | > 20 |
| Tensile strength CD | N/mm² | ISO 527-3 | 25 | 20 | 20 | 20 | 15 | > 20 |
| Elongation at break MD | % | ISO 527-3 | > 350 | > 350 | > 350 | > 300 | > 150 | > 450 |
| Elongation at break CD | % | ISO 527-3 | > 500 | > 500 | > 500 | > 450 | > 250 | > 450 |
| Secant-Modulus MD | MPa | ISO 527-3 | 600 | 280 | 300 | 320 | 450 | 400 |
| Secant-Modulus CD | MPa | ISO 527-3 | 500 | 280 | 300 | 320 | 450 | 400 |

Bei den erfindungsgemäßen Ausführungsbeispielen ergibt sich eine zweckmäßige Haftung auf verschiedenen Untergründen, welche zumindest für die erfindungsgemäßen Beispiele Ex1, Ex2 und Ex3 nur eine geringe Zeitabhängigkeit (Vergleich 1h und 1d) zeigt. Alle erfindungsgemäßen Ausführungsbeispiele sind als Transferfolien geeignet und zeichnen sich bei der Bildung einer Folienrolle durch eine geringe Abwickelkraft von weniger als 0,05 N/cm aus.

## Patentansprüche

1. Haftfolie mit zumindest einer Trägerschicht (1), welche eine erste Haftfolienoberfläche bildet, und mit einer Haftschicht (2), welche eine zweite Haftfolienoberfläche bildet, wobei die Trägerschicht (1) auf Basis von Polyolefin und die Haftschicht (2) gemeinsam von einer coextrudierten Folienstruktur mit einer Foliendicke zwischen 35 µm und 185 µm gebildet sind, wobei die Trägerschicht (1) eine Prägung und mit der Prägung eine Trägerschichtdicke zwischen 30 µm und 150 µm aufweist, wobei die Prägung sich über eine Prägungshöhe erstreckt, welche zumindest 30% der Trägerschichtdicke und/oder zwischen 15 µm und 65 µm beträgt und wobei die Haftschicht (2) eine Haftschichtdicke zwischen 2 µm und 30 µm aufweist.

2. Haftfolie nach Anspruch 1, wobei die Prägestruktur ein Muster aus Prägestrukturelementen (3), insbesondere in Form von Pyramiden oder Pyramidenstümpfen, aufweist.

3. Haftfolie nach Anspruch 2, **dadurch gekennzeichnet, dass** die Prägestrukturelemente (3) ein gleichmäßiges Muster mit einer Zellenfläche zwischen 0,09 mm² und 0,49 mm² aufweisen.

4. Haftfolie nach einem der vorhergehenden Ansprüche, wobei die Folienstruktur zweischichtig aus der Trägerschicht (1) und der Haftschicht (2) oder dreischichtig mit einer Haftvermittlerschicht (4) zwischen der Trägerschicht (1) und der Haftschicht (2) gebildet ist.

5. Haftfolie nach einem der vorhergehenden Ansprüche, wobei die Haftschicht (2) als Hauptbestandteil Polymer ausgewählt aus der Gruppe Styrol-Block-Copolymer (SBC) und Ethylen-Vinylacetat-Copolymer (EVA) aufweist.

6. Haftfolie nach Anspruch 5, wobei die die Haftschicht (2) als Hauptbestandteil Ethylen-Vinylacetat-Copolymer mit einem Vinylacetat-Anteil von 45 % bis 75 % aufweist.

7. Haftfolie nach Anspruch 4 und Anspruch 6, wobei die Folienstruktur dreischichtig ist und die Haftvermittlerschicht (4) als Hauptbestandteil ein Ethylen-Vinylacetat-Copolymer mit einem gegenüber der Haftschicht (2) geringeren Vinylacetat-Anteil aufweist.

8. Haftfolie nach einem der vorhergehenden Ansprüche, wobei die Trägerschicht (1) auf der Basis von Polyethylen (PE) oder Polypropylen (PP) gebildet ist.

9. Haftfolie nach einem der vorhergehenden Ansprüche, wobei die coextrudierte Folienstruktur durchsichtig ist und vorzugsweise eine Trübung von weniger als 10 % gemäß DIN 6180:2024-07 aufweist.

10. Folienrolle mit einer aufgewickelten Haftfolie nach einem der vorhergehenden Ansprüche, wobei eine Abwickelkraft gemäß der FINAT-Testmethode FTM 3 kleiner als 0,08 N/cm ist.

11. Verfahren zur Herstellung einer Haftfolie, insbesondere einer Haftfolie nach einem der Ansprüche 1 bis 9, wobei in einer Flachfoliencoextrusion eine Trägerschicht, welche eine erste Haftfolienoberfläche bildet, und eine Haftschicht, welche eine zweite Haftfolienoberfläche bildet, coextrudiert und zu einer Walzenanordnung (8) geführt werden, welche auf der Seite der Trägerschicht (1) eine Prägewalze (9) umfasst, wobei die Trägerschicht (1) durch die Prägewalze (9) mit einer Prägung versehen wird.

12. Verfahren nach Anspruch 11, wobei die Trägerschicht (1) nach der Coextrusion mit der Prägewalze (9) in einem ersten Oberflächenkontakt geprägt wird, wobei die Trägerschicht (1) schmelzflüssig oder zumindest nicht vollständig erstarrt ist.

13. Verwendung einer Haftfolie nach einem der Ansprüche 1 bis 9 als Transferfolie zum Aufbringen von zumindest einem selbstklebenden Dekorationselement auf einem Untergrund.

14. Verwendung nach Anspruch 13, wobei das zumindest eine selbstklebende Dekorationselement aus einer Folie, insbesondere einer PVC-Folie, gebildet ist.

15. Verwendung nach Anspruch 13 oder 14, wobei das zumindest eine selbstklebende Dekorationselement mit der darauf aufgebrachten Transferfolie von einem Release-Träger abgezogen und somit von der Transferfolie übernommen wird, wobei nachfolgend das zumindest einen selbstklebende Dekorationselement mit der Transferfolie auf den Untergrund aufgebracht und damit verklebt wird und wobei abschließend die Transferfolie von dem Dekorationselement abgezogen wird.
